# EUROPEAN PATENT APPLICATION

(11) **EP 0 570 198 A2**
(43) Date of publication of application: **18.11.1993**
(21) Application number: 93303641.0
(22) Date of filing: 11.05.1993
(51) Int. Cl.: H04N 7/22

(54) **Video distribution for aircraft entertainment**

(30) Priority: 11.05.1992 US 881454
(71) Applicant: Hughes Aircraft Company, Los Angeles, California 90045-0066 (US)
(72) Inventor: Tangonan, Gregory L., Oxnard, CA 93035 (US)
(74) Representative: Colgan, Stephen James

(57) **Abstract**

An aircraft entertainment system employing a fiber optic distribution system and bidirectional signaling. A C-band or K-band conformal antenna is employed on the surface of the aircraft to receive television signals transmitted from a satellite. Received television signals are converted to video signals and these signals are amplified and converted to optical signals using a laser. The optical signals are then coupled to monitors located at the seats in the aircraft by way of the fiber optic distribution system. The fiber optic distribution system routes the optical signals by way of an optical splitter coupled to a plurality of optical fibers that are each coupled to a separate seat group in the aircraft. A photodetector is located adjacent each seat group and is coupled to a plurality of satellite television receivers located adjacent each seat in the respective seat group. The satellite television receivers in turn drive individual television monitors provided for the passengers of the aircraft. Passenger service requests are processed by a central computer that is coupled to keypads and/or phones at passenger locations using the fiber optic distribution system. The distribution system includes electronics and optical circuitry that process and couple the service requests to the central computer for monitoring.

## Description

The present invention relates generally to aircraft entertainment systems, and more particularly, to a fiber optic video distribution system for use in satellite-based aircraft entertainment systems.

One conventional system marketed and installed by Hughes Avicom Inc. is a coax-based system, that is used to broadcast taped video channels only. Such systems provide the aircraft passenger with only a limited amount of television broadcasting. In addition electromagnetic interference (EMI) immunity is of great importance in composite-structure aircraft. Shielding a conventional coax-based system is very costly and results in added aircraft weight.

FM fiber distribution systems for point-to-point applications have been reported by GTE and Bellcore in the literature. Such systems are described by R. Olshansky and V. Lanzisera in an article entitled "60 channel FM video subcarrier multiplexer optical systems", Electronics Letters 22, 1196-1198, 1987, and W. I. Way, et al., in an article entitled "Multichannel FM video transmission using traveling wave amplifiers for subscriber distribution," Electronics Letters 24, 1370, 1988, respectively. None of these systems are designed for use as a video distribution system for use in a satellite-based aircraft entertainment system, although the technologies required are similar.

It would therefore be an advance in the art to have an aircraft entertainment system that provides for the distribution of a full spectrum of live television broadcasting available by way of satellites to passengers on an aircraft.

The present invention is an aircraft entertainment system that employs a fiber optic distribution system that provides video signal distribution, for example, on board an aircraft, for example. A C-band or K-band conformal antenna is employed on the surface of the aircraft to receive television signals transmitted from a satellite. The received television signals are converted to video signals useable by on-board television monitors. These converted signals are transmitted over a fiber distribution system to receivers placed under the seats. The received optical signals are converted to electrical signals which are processed in miniature satellite receivers. The output signals from the receivers are then amplified and converted to optical signals using a laser. The optical signals are then coupled to monitors located at the seats in the aircraft.

The fiber optic distribution system and architecture routes the optical signals by way of an optical splitter coupled to a plurality of optical fibers (preferably single mode) that are each respectively coupled to a separate seat group in the aircraft. Such seat groups include, for example, first class, business class, forward coach, and aft coach. A photodetector, for example a PIN diode photodetector, is located adjacent each seat group and is in turn coupled to a plurality of satellite television receivers respectively located adjacent each seat in the respective seat group. Electrical signals provided by the photodetector and derived from the received optical signals are fed to each of the satellite television receivers located under each seat in the group of seats. The satellite television receivers in turn drive individual television monitors provided for the passengers of the aircraft.

The present fiber-based system permits the broadcasting of live sports channels, news and special events in an aircraft, in addition to the distribution of entertainment derived from on-board generated channels. Each passenger is provided a full satellite broadcast spectrum. In addition, the present distribution system provides for electromagnetic interference (EMI) immunity as a result of using optical fibers, a feature of great importance in composite-structure aircraft.

In a second embodiment of the invention, signals from seat locations are sent back over the distribution system to a processor from each seat to handle requests and services that passengers may have. The optical system not only broadcast signals from the main satellite receiver but also collect and process signals from the passengers. The same optical system used for distribution of the video signals to each seat group is used to process return signals from the passengers. These signals are transmitted to a central computer that manages passenger requests for drinks and assistance, and services such as in-flight phone lines and shopping requests.

To obtain fiber optic signal distribution with bidirectional signaling requires a modification of the interface having the PIN diode detector. In the bidirectional signaling embodiment, this interface includes a light source (laser or LED) to communicate with the central computer. The different return signals (from keypads or phones) are interface to the return optical path by a medium access control. This controls the access to the shared medium (the fiber network) by different passengers. Well-known standard access control techniques (time division, collision detection) may be used by the access controller to prevent access collisions. This is conventional technology for multiple access networks. The return optical signals are sent over the network and received at the service management central computer.

The various features and advantages of the present invention may be more readily understood with reference to the following detailed description taken in conjunction with the accompanying drawings, wherein like reference numerals designate like structural elements, and in which:
Fig. 1 shows a diagram of a first embodiment of the present invention that comprises an aircraft entertainment system that employs a fiber optic distribution system in accordance with the principles of the present invention;
Fig. 2 shows a diagram of the fiber distribution network employed in the fiber optic distribution system of Fig. 1;
Fig. 3 shows a diagram of a second embodiment of the present invention that comprises a video and cabin management system; and
Fig. 4 shows a diagram of a a typical signal distribution system at a seat group in the system of Fig. 3 that includes bidirectional signaling.

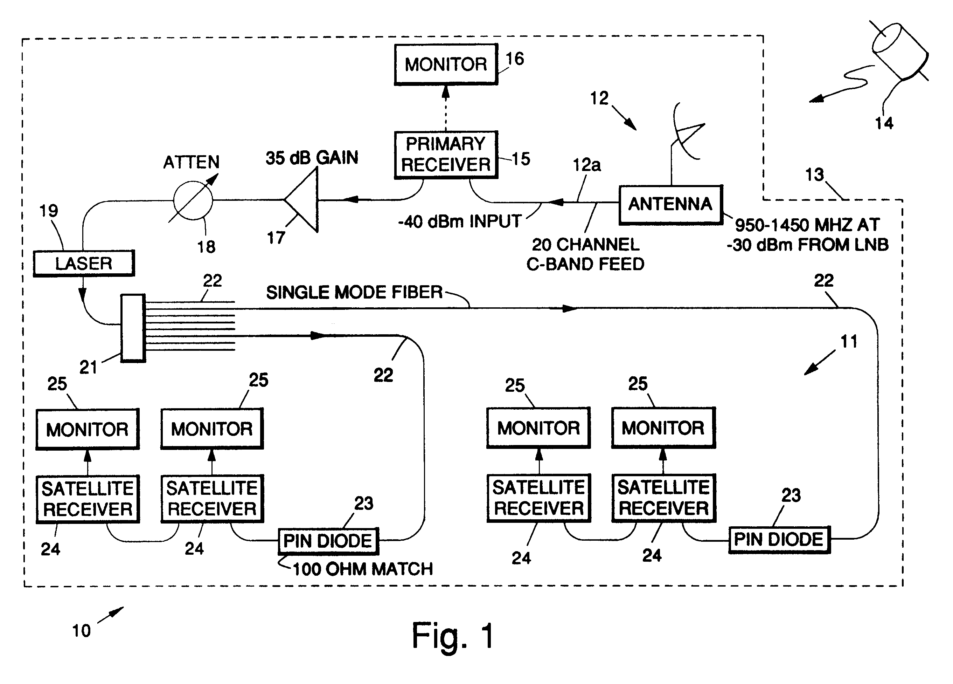

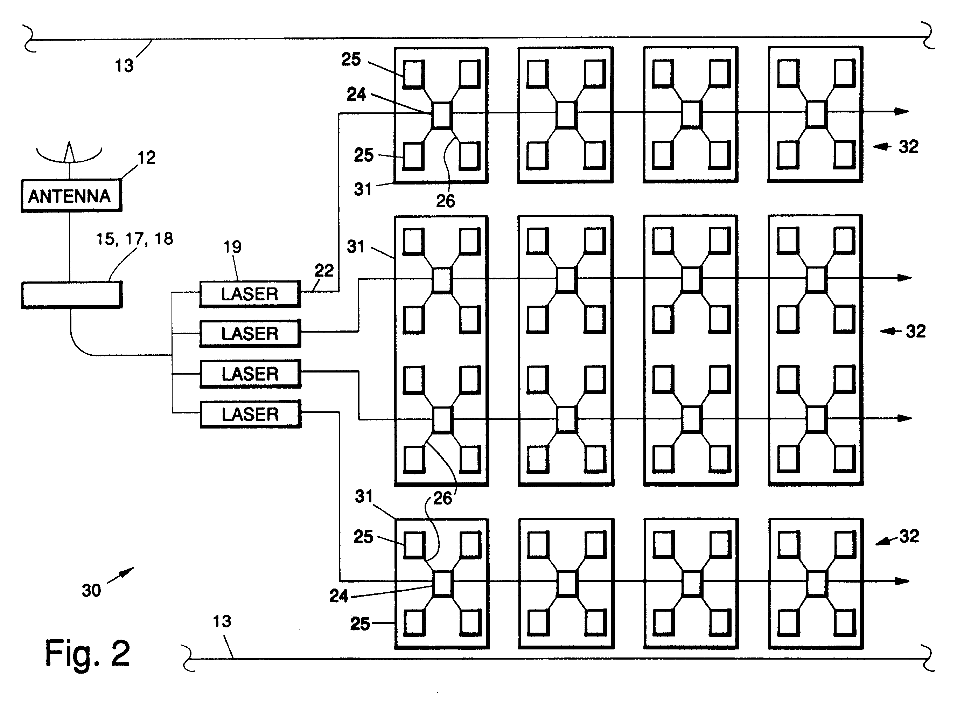

Referring to the drawing figures, Fig. 1 shows a diagram of an aircraft entertainment system 10 that employs a fiber optic distribution system 11 in accordance with the principles of the present invention. Fig. 2 shows a diagram of a fiber distribution network 30 employed in the fiber optic distribution system 11 of Fig. 1.

The aircraft entertainment system 10 comprises a C-band or K-band antenna, such as a conformal antenna 12 disposed on the surface of an aircraft 13 that receives television signals transmitted from a satellite 14. For the purposes of illustration, and not by way of limitation, the conformal antenna 12 is shown in Fig. 1 as a conventional free-standing antenna. Received television signals from the satellite 14 are coupled, for example, by way of a coaxial cable 12a to the primary television receiver 15. The received television signals are converted to video signals useable by on-board satellite television monitors by means of a primary television receiver 15. A monitor 16 may be coupled to the primary television receiver if desired. These converted video signals are then amplified in an amplifier 17 having approximately a 35 dB gain factor and passed through an adjustable attenuator 18 and converted to optical signals using a laser 19. The laser 19 may be, for example, a conventional Fabry-Perot type laser. The choice of a simple Fabry-Perot laser for this application minimizes the overall system cost in comparison to an AM based system which requires a special distributed feedback laser (DFB). Fabry-Perot lasers are about one-tenth the cost of DFB lasers. The optical signals provided by the laser 19 are then coupled to individual television monitors located adjacent seats 31 (shown in Fig. 2) in the aircraft 13 by way of the present fiber optic distribution system 11 as will be described below.

The fiber optic distribution system 11 and architecture routes the optical signals provided by the laser 19 by way of an optical splitter 21 that is coupled to a plurality of optical fibers 22 that are each respectively coupled to a separate seat group 32 (Fig. 2) in the aircraft 13. Preferably, the optical splitter 21 and optical fibers 22 are single mode. Such seat groups 32 include first class, business class, forward coach, and aft coach. A photodetector 23, for example, a PIN diode 23, is located adjacent each seat group 32 and is coupled to a plurality of satellite television receivers 24. Each seat in the respective seat group 32 has a satellite television receiver 24 located under or near it. Electrical signals provided by the photodetector 23 and derived from the received optical signals are fed to each of the plurality of satellite television receivers 24. The satellite television receivers 24 in turn drive individual television monitors 25 through coaxial cables 26. Typical aircraft configurations have four zones: first class business class and two coach zones. Fig. 2 illustrates distribution within a single zone of the aircraft. The signals from the optical splitter 21 are distributed to the different zones over the optical fibers 22. If necessary, optical repeaters are used along the optical path.

The fiber optic distribution system 11 employs high speed optoelectronics technology, and optoelectronic devices that are relatively inexpensive. In particular, the present system 10 employs Fabry-Perot lasers 19, optical splitters 21, single connectors and fiber optic cables 22, and high speed photodetectors 23. The bandwidth required by the fiber optic distribution system 11 is 2 GHz since the satellite television signals received from a low noise block (LNB) are in the 950 to 1700 MHz band.

In operation, television signals from the satellite 14 are received at the antenna 12, which in the case of aircraft applications is a conformal antenna that is available from the Radar Systems Group of Hughes Aircraft Company, the assignee of the present invention. The received signals are either C-band (3-5 GHz) or K-band (11-13 GHz). The received signals are mixed down to 950-1450 MHz, with roughly 12 channels per polarization in this band.

Wideband signal distribution is carried out using the fiber optic cables 22 employed in the fiber optic distribution system 11, which have low loss across C-band and K-band and are immune to electromagnetic interference (EMI), unlike conventional coax-based distribution systems. The 950-1450 MHz signal from the LNB is fed to a group of lasers 19 (Fig. 2), and each laser 19 services a different zone of the aircraft 13 (first, business, forward coach, and aft coach, for example). By selecting a fanout ratio in the optical splitter 21 between 4 to 25, a single laser 19 services 4 to 25 optical receivers or photodetectors 23. The schematic of the fiber distribution network 30 to a zone, for example, a large coach zone, is shown in Fig. 2.

Typical Fabry-Perot lasers provide 1.5 mW out of a fiber pigtail coupled thereto and are readily modulated to 20 to 30 percent depth of modulation. The receiver power (at the photodetector 23) must be at least 2 mW to provide for good carrier-to-noise ratio. Thus there is ample power for the large fanout ratios. This has been shown experimentally. The FM format of the received television signals provides a natural leveraging of carrier-to-noise to high signal-to-noise provided by the FM channel.

The signal received in the photodetectors 23 is fed into the bank of satellite receivers 24 using a daisy chain arrangement. Thus a single optical feed is sufficient to service up to six satellite receivers 24. Therefore, the total number of television monitors 25 per laser 19 can be as high as 150. The fibers are fed along a zone in runners or gutters in the floor of the aircraft 13. The satellite receivers 23 are placed below the seat groups 32. A remote control is used to tune each respective satellite receiver 24 from its respective seat 31.

A satellite distribution system 11 was built and tested. A careful selection of the optoelectronic components was made to achieve an inexpensive system 11. The laser 19 selected was a 1300 nm Fabry-Perot device, manufactured by MRV of Chatsworth, CA, and is relatively inexpensive ($350 in quantities of 1-10) and has the bandwidth, low noise, and linearity sufficient for the satellite distribution system 11. The photodetectors 23 are conventional high speed photodetectors, manufactured by Spitaxx, at a cost of about $100, which are relatively expensive, however. The pigtail optical splitters 21 used to couple energy from the laser 19 were manufactured by Canstar, for example. Commercial satellite receivers 24 are manufactured by NORSAT of Canada, and were used in the demonstration system 11. Excellent signal quality video distribution was demonstrated, greater than 55 dB weighted signal-to-noise ratio, which is broadcast quality. For comparison, cable TV services typically provide a 43 dB signal-to-noise ratio at the home.

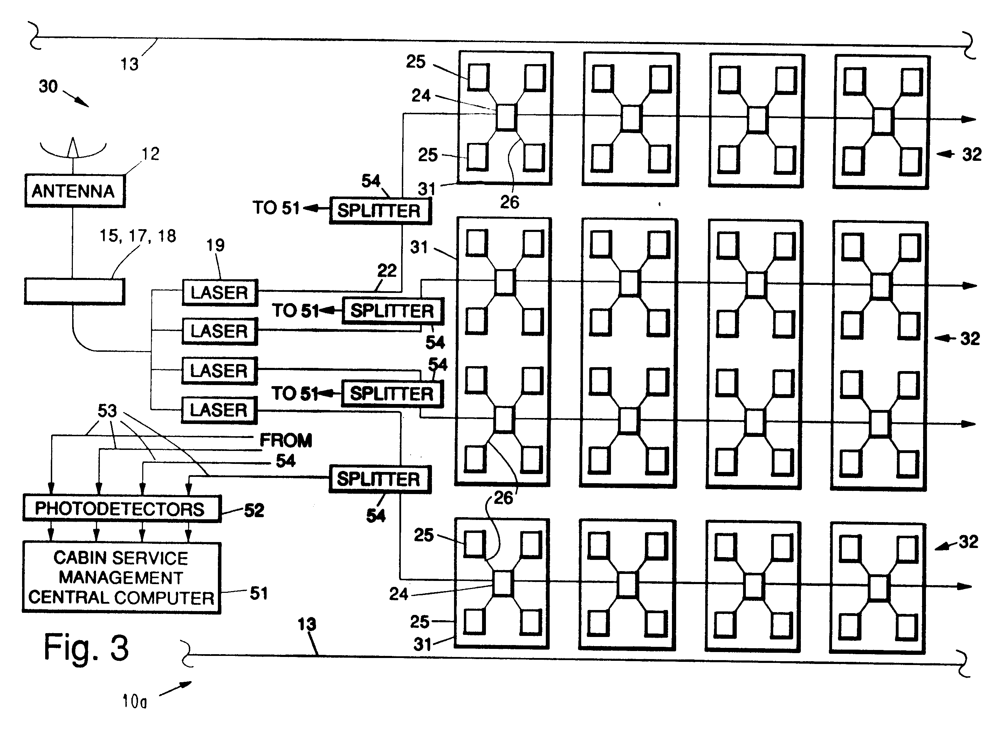

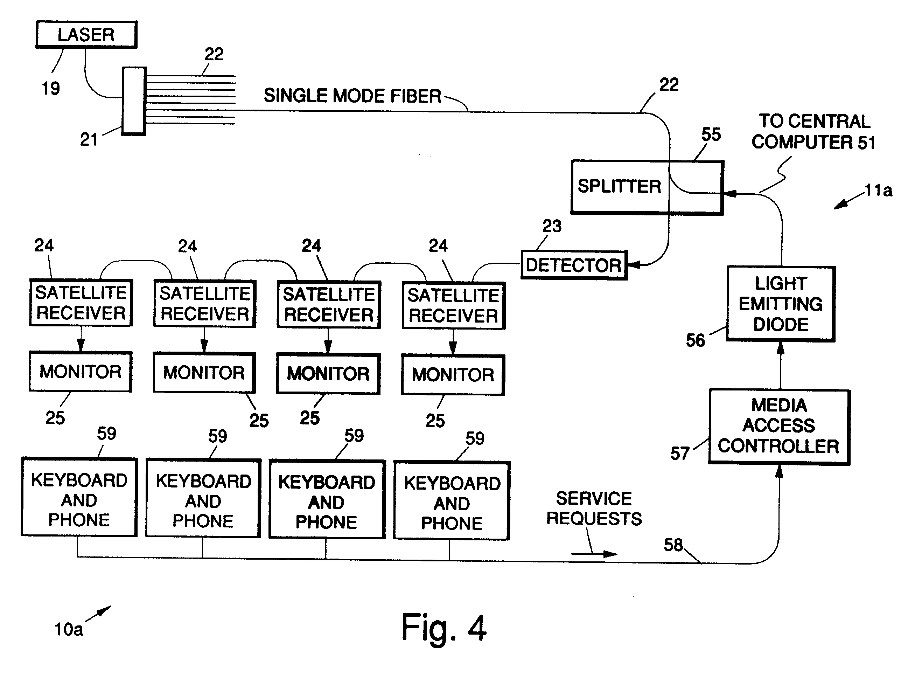

Fig. 3 shows a diagram of a video and cabin management system 10a in accordance with the present invention which is a modification of the system 10 of Fig. 1. The system 10a of Fig. 3 further comprises a cabin service management computer 51 or central computer 51 that is coupled to the optical fiber 22 by way of a plurality of photodetectors 52 and a second plurality of optical splitters 54 coupled by way of fiber optic cables 53. A third plurality of optical splitters 55 are employed at the seat groups 32 and are used to couple signals from the seat group 32 to the central computer 51 for processing. The interface arrangement at the third plurality of optical splitters 55 is shown in more detail in Fig. 4. More specifically, Fig. 4 shows a diagram of the signal distribution system 11a at a seat group 32 in the system 10a of Fig. 3 that provides for bidirectional signaling.

With reference to Fig. 4, a light emitting diode (LED) 56 is coupled to the optical fiber 22 by way of one of the third plurality of optical splitters 55. The LED 56 is driven by a media access controller 57 that is coupled by way of conventional electrical wires 58 to each seat in a seat group 32. Signal generators 59, such as keypads and phones 59, for example, are connected to the electrical wires 58 that couple signals to the media access controller 57. The media access controller 57 manages the signals from the keypads and phones 59, and transmits the signals by way of the LED 56, through third optical splitter 55, the optical fiber 22, the second optical splitter 54, the optical cable 53, and the photodetector 52 to the cabin service management computer 51. An operator (cabin attendant) of the computer 51 monitors service calls and takes appropriate action to respond to the requests.

In operation, the system 10a not only broadcasts signals from the primary satellite receiver 15 but also collects and processes signals from passengers. The same optical distribution system 11 is used to distribute the video signals to each seat group 32 and to process return signals from the passengers, with the incorporation of only a few added components. These signals are transmitted to the central computer 51 that manages passenger requests for drinks and assistance, and services such as in-flight phone lines and shopping requests, for example.

The different return signals (from keypads or phones 59) are interfaced to the return optical path by the media access controller 57. This controller 57 controls the access to the shared medium (the fiber network) by different passengers. Well-known conventional access control techniques (time division, collision detection) may be used in the access controller 56 to prevent access collisions. This is conventional technology used in multiple access networks. The return optical signals are sent over the fiber network and received at the service management computer 51.

Thus there has been described a new and improved fiber-based video distribution system for aircraft entertainment. It is to be understood that the above-described embodiment is merely illustrative of some of the many specific embodiments which represent applications of the principles of the present invention. Clearly, numerous and other arrangements can be readily devised by those skilled in the art without departing from the scope of the invention.

## Claims

1. An aircraft entertainment system comprising:
an antenna adapted to receive television signals transmitted from a satellite;
a receiver for converting the received television signals transmitted from the satellite into video signals useable by satellite television receivers;
a distribution system for distributing the video signals to a plurality of television monitors that comprises:
a laser coupled to the receiver for converting the received television signals into corresponding optical signals;
a fiber optic distribution system for routing the optical signals to the satellite television receivers that comprises:
an optical splitter coupled to the laser;
a plurality of optical fibers coupled to the optical splitter;
a plurality of optical photodetectors that are respectively coupled to individual ones of the optical fibers;
a plurality of satellite television receivers coupled to respective ones of the optical photodetectors; and
wherein the plurality of television monitors are respectively coupled to each of the satellite television receivers.

2. In an aircraft entertainment system comprising an antenna adapted to receive television signals transmitted from a satellite, a receiver for converting received television signals transmitted from the satellite into video signals useable by a plurality of satellite television receivers, and a plurality of television monitors respectively coupled to each of the satellite television receivers for displaying television signals to passengers in the aircraft, a distribution system for distributing the video signals to the television monitors comprising:
a laser coupled to the receiver for converting the received television signals into corresponding optical signals;
a fiber optic distribution system for routing the optical signals to the satellite television receivers that comprises:
a optical splitter coupled to the laser;
a plurality of optical fibers coupled to the optical splitter;
a plurality of optical photodetectors that are respectively coupled to individual ones of the optical fibers; and
coupling means coupled between respective ones of the plurality of optical photodetectors and the plurality of satellite television receivers.

3. The system of claim 1 or claim 2 wherein the antenna comprises a C-band or a K-band conformal antenna disposed on the surface of the aircraft.

4. The system of claim 1 or claim 2 further comprising amplifier means coupled between the receiver and the laser for amplifying the converted signals.

5. The system of claim 4 further comprising variable attenuator means coupled between the amplifier and the laser for controllably attenuating amplified signals provided by the amplifier.

6. The system of claim 1 or claim 2 wherein the optical photodetectors comprise PIN diode photodetectors.

7. The system of claim 1 or claim 2 wherein the individual optical photodetectors are located adjacent predetermined seat groups in the aircraft.

8. The system of claim 1 or claim 2 wherein the plurality of satellite television receivers are respectively located adjacent seats in the respective seat group.

9. The system of claim 1 or claim 2 further comprising:
signal generator means for generating request signals indicative of passenger service requests;
light generation means for converting the request signals into corresponding optical request signals;
access controller means coupled between the signal generator means and the light generation means for processing the request signals to cause the light generation means to output the optical request signals;
a second optical splitter coupled to the optical fiber for coupling the optical request signals thereto;
a third optical splitter coupled to the optical fiber for coupling the optical request signals out of the optical fiber;
optical detector means for converting the optical request signals into electrical request signals; and
computer means coupled to the detector means for processing the request signals indicative of passenger service requests.

10. The system of claim 9 wherein the optical detector means comprise PIN diode photodetectors.
